# EUROPEAN PATENT APPLICATION

(11) **EP 4 640 068 A1**
(43) Date of publication of application: **29.10.2025**
(21) Application number: 23906770.5
(22) Date of filing: 08.12.2023
(51) Int. Cl.: A23L 2/80, A23F 3/38, A23F 5/18

(54) **PRODUCTION METHOD OF DRINKING AQUEOUS SOLUTION WITH LOWERED PURINE ALKALOID CONTENT**

(30) Priority: 20.12.2022 JP 2022203220
(71) Applicant: Suntory Holdings Limited, Osaka-shi, Osaka 530-8203 (JP)
(72) Inventor: MATSUOKA, Yuki, Kawasaki-shi, Kanagawa 211-0067 (JP); NAKAJIMA, Takeshi, Kawasaki-shi, Kanagawa 211-0067 (JP); ONUKI, Hitoshi, Kawasaki-shi, Kanagawa 211-0067 (JP); FUJITA, Hiroki, Kawasaki-shi, Kanagawa 211-0067 (JP)
(74) Representative: Vossius & Partner Patentanwälte Rechtsanwälte mbB
(86) International application number: PCT/JP2023/043997
(87) International publication number: WO 2024/135404

(57) **Abstract**

The purpose of the present invention is to provide a method of producing an oral aqueous solution for drinking in which a purine alkaloid is effectively reduced. A metal-organic framework including Zr⁴⁺, Cr³⁺, or Al³⁺ as a metal ion and including a terephthalic acid ion as an organic ligand is brought into contact with an oral aqueous solution for drinking.

## Description

### TECHNICAL FIELD

The present invention relates to a method of producing an oral aqueous solution for drinking in which the content of a purine alkaloid is reduced. More specifically, the present invention relates to a method of producing an oral aqueous solution for drinking in which the content of a purine alkaloid is reduced by using a metal-organic framework.

### BACKGROUND ART

Recreational beverages such as coffee beverages and tea beverages are widely consumed in general and contain caffeine. Caffeine is one kind of purine alkaloid, and while the pharmacological effects thereof create a demand for active consumption to suppress drowsiness, for example, some consumers avoid beverages containing caffeine, such as coffee beverages, due to a concern that intake thereof may interfere with sleep or falling asleep. Therefore, studies have been conducted on an attempt to remove caffeine from beverages containing caffeine, which is one kind of purine alkaloid, without affecting other ingredients as much as possible.

Conventional methods for removing a purine alkaloid, for example, caffeine, from oral aqueous solutions for drinking include use of an adsorbent such as activated carbon or zeolite, and use of an ion exchange resin. In addition, examples of other methods include a method of using a chlorine-based organic solvent such as methylene chloride or chloroform, and a method of extracting and removing a purine alkaloid with supercritical carbon dioxide. It is also known to use activated clay or acidic clay as an adsorbent for removing caffeine (PTL 1 and PTL 2).

On the other hand, in recent years, a metal-organic framework (sometimes referred to as "MOF") has attracted attention as a novel porous material. The metal-organic framework is a structural body in which a porous structure is formed by assembly of metal complex molecules, and is also called a porous metal complex or an integrated metal complex. The metal-organic framework has a characteristic allowing design and control of a more uniform pore size as compared with a porous material such as activated carbon or zeolite. In addition, since the metal-organic framework is usually synthesized as fine powder, it is also one of the characteristics thereof that the metal-organic framework is easy to handle when considering practical applications.

It has been revealed from previous studies that the metal-organic framework has high adsorption properties for gas, and the metal-organic framework has heretofore been mainly used in a gas storage device, a separation device, and the like (PTL 3 to PTL 5). It is also known that the metal-organic framework is used as a catalyst because of the structurally rich ionicity thereof (PTL 6).

### CITATION LIST

### PATENT LITERATURE

PTL 1: Japanese Patent Laid-Open No. 6-142405
PTL 2: Japanese Patent Laid-Open No. 2004-222719
PTL 3: Japanese Patent Laid-Open No. 2018-150255
PTL 4: Japanese Patent Laid-Open No. 2020-18995
PTL 5: Japanese Patent Laid-Open No. 2020-105118
PTL 6: Japanese Patent Laid-Open No. 2017-149683

### SUMMARY OF INVENTION

### TECHNICAL PROBLEM

As described above, in the technical field of oral aqueous solutions for drinking such as coffee beverages and tea beverages, removing a purine alkaloid, for example, caffeine from an oral aqueous solution for drinking to reduce the content of caffeine is one objective in developing and designing the oral aqueous solution for drinking such as a beverage product. An object of the present invention is thus to provide a method of producing an oral aqueous solution for drinking in which a purine alkaloid such as caffeine is reduced.

### SOLUTION TO PROBLEM

The present inventors have focused on a metal-organic framework that has rarely been utilized for liquids in conventional techniques in considering reduction of caffeine, as one of purine alkaloids, from an aqueous solution containing caffeine. As described above, metal-organic frameworks have been mainly used for gas, such as a gas storage device or a separation device in the past. As a result of intensive studies to solve the above problem, the present inventors have found that a metal-organic framework having a predetermined structure has an action of adsorbing caffeine and is useful for reducing the amount of caffeine in a caffeine-containing aqueous solution. Based on such findings, the present inventors have completed the present invention.

That is, the present invention relates to, but not limited to, the following items.
(1) A method of producing a purine alkaloid-reduced oral aqueous solution for drinking, the method including bringing, into contact with an oral aqueous solution for drinking, a metal-organic framework that includes Zr⁴⁺, Cr³⁺, or Al³⁺ as a metal ion and includes a terephthalic acid ion as an organic ligand.
(2) The method according to item (1), in which the oral aqueous solution for drinking includes a purine alkaloid.
(3) The method according to item (2), in which a content of the purine alkaloid in the oral aqueous solution for drinking is 2000 ppm or less.
(4) The method according to any one of items (1) to (3), characterized in that 0.01 to 20 parts by weight of the metal-organic framework is brought into contact with 100 parts by weight of the oral aqueous solution for drinking.
(5) The method according to any one of items (1) to (4), in which the metal-organic framework has a pore size of 0.2 to 6 nm.
(6) The method according to any one of items (1) to (5), in which the purine alkaloid is caffeine.
(7) The method according to any one of items (1) to (6), in which the oral aqueous solution for drinking is a beverage.
(8) The method according to item (7), in which the beverage is a coffee beverage or a tea beverage.
(9) A purine alkaloid-reduced oral aqueous solution for drinking, which is produced by a method including bringing, into contact with an oral aqueous solution for drinking, a metal-organic framework that includes Zr⁴⁺, Cr³⁺, or Al³⁺ as a metal ion and includes a terephthalic acid ion as an organic ligand.
(10) A method for adsorbing a purine alkaloid, the method including bringing, into contact with an oral aqueous solution for drinking, a metal-organic framework that includes Zr⁴⁺, Cr³⁺, or Al³⁺ as a metal ion and includes a terephthalic acid ion as an organic ligand.
(11) A purine alkaloid adsorbent including a metal-organic framework that includes Zr⁴⁺, Cr³⁺, or Al³⁺ as a metal ion and includes a terephthalic acid ion as an organic ligand.

### ADVANTAGEOUS EFFECTS OF INVENTION

According to the present invention, a method of producing an oral aqueous solution for drinking in which a purine alkaloid is effectively reduced can be provided. By utilizing the technique of the present invention, a method of effectively adsorbing and removing a purine alkaloid in an oral aqueous solution for drinking can be provided. By using the present invention, for example, a beverage (for example, a coffee beverage or a tea beverage) in which the content of caffeine is significantly reduced can be provided.

### BRIEF DESCRIPTION OF DRAWINGS

Fig. 1 is a graph showing concentrations of respective organic acids in a coffee beverage after separating and collecting a metal-organic framework.
Fig. 2 is a graph showing amounts of caffeine adsorbed per 1 g of the metal-organic framework in various liquid amounts of a caffeine-containing aqueous solution.
Fig. 3 is a graph showing an adsorption isotherm of the metal-organic framework.

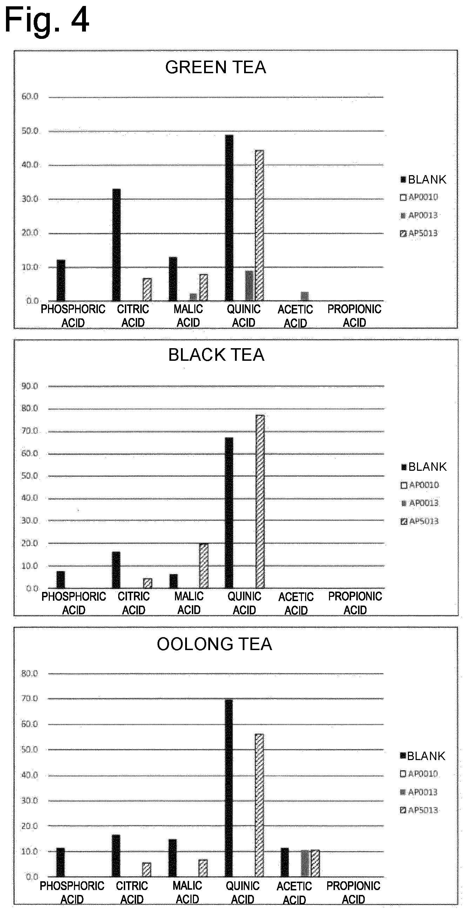

Fig. 4 is a graph showing concentrations of respective organic acids in a green tea beverage, a black tea beverage, and an oolong tea beverage after separating and collecting the metal-organic framework.

### DESCRIPTION OF EMBODIMENTS

The present invention will be described below. Unless otherwise specified, "ppm," "ppb," and "wt%" used herein refer to ppm, ppb, and wt% in terms of weight/volume (w/v), respectively.

One aspect of the present invention is a method of producing a purine alkaloid-reduced oral aqueous solution for drinking, the method including bringing, into contact with an oral aqueous solution for drinking, a metal-organic framework that includes Zr⁴⁺, Cr³⁺, or Al³⁺ as a metal ion and includes a terephthalic acid ion as an organic ligand.

In the present specification, the purine alkaloid-reduced oral aqueous solution for drinking means an oral aqueous solution for drinking in which the content of a purine alkaloid is reduced. In addition, the state in which "the content of a purine alkaloid is reduced" means a state in which the content of the purine alkaloid is smaller than the amount of the purine alkaloid contained in the oral aqueous solution for drinking before being brought into contact with the metal-organic framework.

In the method of the present invention, a metal-organic framework is used. The metal-organic framework (sometimes referred to as "MOF") is a material based on complex chemistry, the material forming a porous structure utilizing a coordination bond between a metal ion and an organic compound. The metal-organic framework forms a crystalline polymer structure having a space (pore) inside thereof by combining various metal ions and a cross-linkable organic ligand linking the metal ions. Such a material is also called a porous metal complex or an integrated metal complex, and has been heretofore used to adsorb a certain gas component (hydrogen gas, methane gas, carbon dioxide, or the like) mainly in gas fields as described above.

The metal-organic framework used in the present invention contains, as the metal ion, Zr⁴⁺ (zirconium ion (4+)), Cr³⁺ (chromium ion (3+)), or Al³⁺ (aluminum ion (3+)). Any one kind of the metal ions Zr⁴⁺, Cr³⁺, and Al³⁺ may be included, or two or more kinds (or all of three kinds) thereof may be included. In the present invention, it is preferred that only one kind of Zr⁴⁺, Cr³⁺, and Al³⁺ be included. In addition, Cr³⁺ or Al³⁺ is preferably included, and Al³⁺ is more preferably included in the metal-organic framework among the three kinds of metal ions.

The metal-organic framework in the present invention contains a terephthalic acid ion as the organic ligand. The organic ligand is a cross-linkable organic material linking the metal ion, and is characterized by forming a coordination bond with the metal ion. The terephthalic acid ion is an ion formed through ionization of terephthalic acid (chemical formula: C₈H₆O₄, CAS Registry Number: 100-21-0) and is represented by the following chemical formula, for example.

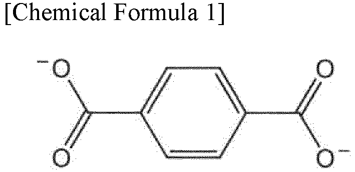

The metal-organic framework may include only the terephthalic acid ion as the organic ligand, or may include an organic ligand other than the terephthalic acid ion. When another organic ligand is included, the proportion of the terephthalic acid ion in all ligands is not particularly limited, but is 90 mol% or more, preferably 95 mol% or more, and more preferably 98 mol% or more, for example.

Examples of the metal-organic framework used in the present invention include Aluminum hydroxide terephthalate MOF (MIL-53(Al)) (chemical formula: C₈H₄AlO₅, CAS Registry Number: 654061-20-8), MIL-101(Cr) (chemical formula: C₂₄H₁₆Cr₃FO₁₆, CAS Registry Number: 869288-09-5), and zirconium 1,4-dicarboxybenzene MOF (UiO-66) (chemical formula: C₄₈H₂₈O₃₂Zr₆, CAS Registry Number: 1072413-89-8), but are not limited thereto. In the present invention, MIL-53(Al) and MIL-101(Cr) are preferably used, and MIL-53(Al) is particularly preferably used.

The metal-organic framework is characterized by having a porous structure. The pore size of the metal-organic framework in the present invention is not particularly limited, but is, for example, 0.2 to 6 nm, preferably 0.3 to 5 nm, and more preferably 0.4 to 4 nm. The pore size of the metal-organic framework can be measured by using a commercially available pore distribution measurement device and the like.

The specific surface area (BET surface area) of the metal-organic framework is not particularly limited, but is, for example, 60000 m²/g or less, preferably 300 to 4000 m²/g, and more preferably 500 to 2000 m²/g. The specific surface area of the metal-organic framework can be measured by using a commercially available specific surface area measurement device and the like.

In the present invention, a commercially available metal-organic framework may be used, or a metal-organic framework prepared by oneself may be used. The metal-organic framework can be produced by using a conventionally known method. Examples of a method of producing the metal-organic framework include a solution method and a hydrothermal method. The solution method is a method of producing the metal-organic framework by mixing the metal ion and the organic ligand in a solution. The mixing may be usually performed at ordinary temperature and ordinary pressure, but conditions therefor are not particularly limited. The solution method includes a diffusion method, in which the solution is mixed by diffusion, and a stirring method, in which the solution is mixed by stirring, and either method may be used. The hydrothermal method is a method of producing the metal-organic framework by placing a solvent and raw material reagents in a closed vessel, heating same to the boiling point of the solvent or higher, and proceeding a hydrothermal reaction (also referred to as a solvothermal reaction).

**In** addition to the above methods, a microwave method, in which reagents to be raw materials and a solvent are placed in a reaction vessel and irradiated with microwaves (electromagnetic waves) to produce the metal-organic framework; an ultrasonic method, in which reagents to be raw materials and a solvent are placed in a reaction vessel and irradiated with ultrasound to produce the metal-organic framework; and a solid-phase synthesis method, in which reagents to be raw materials are mechanically mixed without using a solvent to produce the metal-organic framework, may also be used. **In** any of these methods, the concentration of the metal ion in the solvent, the concentration of the organic ligand in the solvent, reaction temperature, pressure, time, and the frequency of microwaves or ultrasound can be appropriately set according to the purpose and conditions.

The method of the present invention includes a step of bringing the metal-organic framework into contact with an oral aqueous solution for drinking. The oral aqueous solution for drinking is an aqueous solution intended to be taken into the body by oral ingestion. In the present invention, the oral aqueous solution for drinking is not limited to soft drinks as defined by the Food Sanitation Act, and an aqueous solution for drinking containing alcohol, another medical ingredient, a medicinal ingredient, or the like may be included, and alcoholic beverages as defined by the Liquor Tax Act, and pharmaceuticals, quasi-drugs, and the like as defined by the Act on Pharmaceuticals and Medical Devices are also applied. The oral aqueous solution for drinking may be consumed as is without dilution (straight), or consumed after dilution. When the oral aqueous solution for drinking is diluted, the mixer therefore is not particularly limited, and examples thereof include water, carbonated water, milk, and fruit juice. In addition, the consumption temperature is also not particularly limited, and the oral aqueous solution for drinking may be consumed at room temperature, or consumed after being cooled or warmed. In the method of the present invention, the oral aqueous solution for drinking with which the metal-organic framework is brought into contact may be an oral aqueous solution for drinking immediate before the purine alkaloid is reduced, an intermediate product of an oral aqueous solution for drinking before the purine alkaloid is reduced, or a raw material thereof in a state of an orally consumable aqueous solution.

In the present invention, a purine alkaloid-reduced oral aqueous solution for drinking can be produced through the step of bringing the metal-organic framework into contact with the oral aqueous solution for drinking. Purine alkaloids are a collective term for alkaloids that have a purine skeleton. Note that alkaloids are low-molecular-weight compounds including basic nitrogen and are known to mainly exist in plants. Examples of purine alkaloids include caffeine, theobromine, and theophylline. In the present invention, caffeine (chemical formula: C₈H₁₀N₄O₂, CAS Registry Number: 58-08-2) is particularly preferable among them.

In the method of the present invention, the oral aqueous solution for drinking with which the metal-organic framework is brought into contact contains a purine alkaloid. The content of the purine alkaloid in the oral aqueous solution for drinking with which the metal-organic framework is brought into contact is not particularly limited, but is, for example, 2000 ppm or less, preferably 1600 ppm or less, and more preferably 1500 ppm or less. Although the lower limit value of the content of the purine alkaloid in the oral aqueous solution for drinking is not particularly limited, the content is, for example, 10 ppm or more, preferably 30 ppm or more, and more preferably 50 ppm or more. The content of the purine alkaloid in the oral aqueous solution for drinking is typically, for example, 10 to 2000 ppm, preferably 30 to 1600 ppm, and more preferably 50 to 1500 ppm. When two or more kinds of the purine alkaloid are present, the above-described content means the total content of the various purine alkaloids. The content of the purine alkaloid can be measured by a known method, and can be measured by, for example, an HPLC method, an LC/MS method, a GC/MS method, an LC method, a GC method, near infrared spectroscopy, and the like.

In the method of the present invention, 0.01 to 20 parts by weight of the metal-organic framework can be brought into contact with 100 parts by weight of the oral aqueous solution for drinking, for example, but the present invention is not limited thereto. In the present invention, preferably 0.02 to 10 parts by weight, more preferably 0.05 to 5 parts by weight of the metal-organic framework can be brought into contact with 100 parts by weight of the oral aqueous solution for drinking.

A Liquid extracted from a plant such as coffee, cacao, tea leaves (such as green tea, black tea, and oolong tea), and Cola can be used as the oral aqueous solution for drinking with which the metal-organic framework is brought into contact. However, the oral aqueous solution for drinking with which the metal-organic framework is brought into contact is not limited thereto, and a liquid extracted from another plant, or an aqueous solution to which a synthetic purine alkaloid or a purified purine alkaloid (including roughly purified product) is added can also be used. In the present invention, the oral aqueous solution for drinking with which the metal-organic framework is brought into contact may be a beverage. The beverage refers to a soft drink as defined by the Food Sanitation Act, or an alcoholic beverage as defined by the Liquor Tax Act, but is preferably a soft drink. Examples of such a beverage include a coffee beverage, a tea beverage (such as a green tea beverage, a black tea beverage, and an oolong tea beverage), a cola beverage, and a cocoa beverage, but are not limited thereto. **In** the present invention, a coffee beverage and a tea beverage (such as a green tea beverage, a black tea beverage, and an oolong tea beverage) are preferably used as the oral aqueous solution for drinking with which the metal-organic framework is brought into contact.

**In** addition, in the present invention, the purine alkaloid-reduced oral aqueous solution for drinking is also preferably a beverage, and is more preferably a coffee beverage or a tea beverage (such as a green tea beverage, a black tea beverage, and an oolong tea beverage).

The method of the present invention may include a step of removing the metal-organic framework from the oral aqueous solution for drinking after bringing the metal-organic framework into contact with the oral aqueous solution for drinking. Although there is no particular limitation, the metal-organic framework after being brought into contact with the oral aqueous solution for drinking can be removed from the oral aqueous solution for drinking by performing solid-liquid separation using a method well-known to a person skilled in the art, such as filtration, for example.

Another aspect of the present invention is a purine alkaloid-reduced oral aqueous solution for drinking, produced by a method including bringing, into contact with an oral aqueous solution for drinking, a metal-organic framework that includes Zr⁴⁺, Cr³⁺, or Al³⁺ as a metal ion and includes a terephthalic acid ion as an organic ligand. Matters related to the purine alkaloid-reduced oral aqueous solution for drinking of the present invention are as described above with respect to the method of producing a purine alkaloid-reduced oral aqueous solution for drinking, or are apparent therefrom.

A still another aspect of the present invention is a method of adsorbing a purine alkaloid, the method including bringing, into contact with an oral aqueous solution for drinking, a metal-organic framework that includes Zr⁴⁺, Cr³⁺, or Al³⁺ as a metal ion and includes a terephthalic acid ion as an organic ligand. The metal-organic framework, materials for the metal-organic framework, and other matters related to the method of adsorbing a purine alkaloid are as described above with respect to the method of producing a purine alkaloid-reduced oral aqueous solution for drinking, or are apparent therefrom. Note that the oral aqueous solution for drinking in the method of adsorbing a purine alkaloid corresponds to the oral aqueous solution for drinking with which the metal-organic framework is brought into contact among the oral aqueous solutions for drinking described with respect to the method of producing a purine alkaloid-reduced oral aqueous solution for drinking.

In the method of adsorbing a purine alkaloid according to the present invention, by adsorbing a purine alkaloid in the oral aqueous solution for drinking with the metal-organic framework, the purine alkaloid can be partially or completely removed from the oral aqueous solution for drinking. In addition, the purine alkaloid adsorbed and removed by said method can be desorbed from the metal-organic framework by utilizing characteristics of the metal-organic framework. Accordingly, a still another aspect of the present invention is a method of desorbing, from a metal-organic framework, a purine alkaloid adsorbed using the method (method of adsorbing a purine alkaloid) of the present invention described above. The desorbed purine alkaloid can also be used for another purpose. In addition, the metal-organic framework from which the purine alkaloid has been desorbed can be reused in the method of adsorbing a purine alkaloid.

In addition, a still another aspect of the present invention is a purine alkaloid adsorbent including a metal-organic framework that includes Zr⁴⁺, Cr³⁺, or Al³⁺ as a metal ion and includes a terephthalic acid ion as an organic ligand. By using the adsorbent of the present invention, a purine alkaloid can be effectively removed from an oral aqueous solution for drinking. In addition, the adsorbent of the present invention can also desorb the purine alkaloid having been adsorbed once. The metal-organic framework constituting the adsorbent of the present invention, materials for the metal-organic framework, and the like are as described above with respect to the method of a purine alkaloid-reduced oral aqueous solution for drinking, or are apparent therefrom.

### EXAMPLES

The present invention will be specifically described in detail with reference to experimental examples below, but the present invention is not limited thereto. In addition, in the present specification, numerical value ranges are set forth as including the endpoints thereof unless otherwise specified.

Experimental Example 1: screening of MOF having caffeine adsorption performance

In order to obtain a metal-organic framework (MOF) exhibiting a caffeine adsorption action, various MOFs were prepared, and caffeine adsorption performance in an aqueous caffeine solution was examined. MOFs produced by Atomis Inc. were used, and the caffeine adsorption performance of various MOFs shown in the following table was examined.

**[Table 1]**

| No. | MOF | Metal ion | Ligand precursor | Pore size [nm] |
|---|---|---|---|---|
| AP0005 | MOF-801 | Zr4+ | Fumaric acid | 0.74 |
| AP0010 | UiO-66 | Zr4+ | Terephthalic acid | 0.87 |
| AP5018 | MIL-88B | Fe3+ | Terephthalic acid | 0.91 |
| AP0013 | MIL-101(Cr) | Cr3+ | Terephthalic acid | 3.62 |
| AP5013 | MIL-53(Al) | Al3+ | Terephthalic acid | 0.75 |
| AP5015 | Al(fumarate) | Al3+ | Fumaric acid | 0.58 |
| AP5020 | CAU-10-H | Al3+ | Isophthalic acid | 0.6 |
| AP0008 | ZIF-8 | Zn2+ | 2-Methylimidazole | 1.13 |
| AP0082 | CALF-20 | Zn2+ | 1,2,3-Triazole, Oxalic acid | 0.44 |

One gram of each of the above MOFs was added to 50 g of an aqueous caffeine solution at a caffeine concentration of 600 mg/L. The aqueous caffeine solution to which the MOF was added was left to stand at ordinary temperature for 24 hours, and the MOF was then separated and collected. Then, the weight and the caffeine concentration of the aqueous caffeine solution after the MOF collection were measured. With respect to the caffeine concentration, the anhydrous caffeine concentration in the solution was measured by an HPLC method, and the measurement was conducted in Japan Food Research Laboratories. Conditions for measuring the caffeine concentration were as follows.
Pretreatment: dilution with methanol solution
Device used: HPLC LC-20AD (SHIMADZU CORPORATION)
Column: CAPCELL PAK C18 MG 5 µm (diameter 3 mm × 15 cm) (Shiseido Company, Limited)
Mobile phase: 0.01 mol ammonium acetate/methanol mixture
Detection device: UV-VIS spectrometer SPD-20A (SHIMADZU CORPORATION)
Detection wavelength: 270 nm

The weight of caffeine was calculated from the above caffeine concentration, with the specific weight of the aqueous caffeine solution after the MOF collection taken as 1.0. The difference in the weight of caffeine after the MOF collection with data on a blank (without MOF addition) was taken as the amount of caffeine adsorbed, and the amount of caffeine adsorbed per 1 g of the MOF was determined. In addition, the proportion of the amount of caffeine adsorbed with respect to the weight of caffeine in the blank (without MOF addition) as caffeine removal performance was investigated. Results are shown below.

**[Table 2]**

| No. | MOF | **MOF addition amount** (g) | **Aqueous caffeine solution (g)** | | **Caffeine concentration (mg/L)** | **Caffeine weight** (mg) | **Amount of caffeine adsorbed per 1 g of MOF** (mg/gMOF) | **Caffeine removal performance** |
|---|---|---|---|---|---|---|---|---|
| | | | **Before MOF addition** | **After MOF collection** | | | | |
| **None** | - | - | - | - | 590 | 29.5 | - | |
| AP0005 | MOF-801 | 1.035 | 49.629 | 45.195 | 590 | 26.7 | 2.7 | 10% |
| AP0010 | UIO-66 | 1.049 | 49.583 | 43.709 | 120 | 5.2 | 23.1 | 82% |
| AP5018 | MIL-88B | 0.998 | 49.684 | 46.161 | 540 | 24.9 | 4.6 | 16% |
| AP0013 | MIL-101(Cr) | 1.002 | 49.700 | 46.586 | 30 | 1.4 | 28.0 | 95% |
| AP5013 | MIL-53(Al) | 0.998 | 49.659 | 46.225 | N.D. | 0.0 | 29.6 | 100% |
| AP5015 | Al(fumarate) | 1.000 | 49.723 | 45.479 | 590 | 26.8 | 2.7 | 9% |
| AP5020 | CAU-10-H | 1.007 | 49.579 | 47.115 | 560 | 26.4 | 3.1 | 11% |
| AP0008 | ZIF-8 | 1.009 | 49.690 | 47.015 | 280 | 13.2 | 16.2 | 55% |
| AP0082 | CALF-20 | 1.023 | 49.677 | 47.591 | 590 | 28.1 | 14 | 5% |

As shown above, high caffeine adsorption performance was found in AP0010, AP0013, AP5013, and AP0008 among the 10 kinds of MOFs investigated.

### Experimental Example 2: selective caffeine separation performance

With respect to four kinds of MOFs obtained in the above tests, the selective caffeine separation performance was investigated using a coffee extraction liquid. A commercially available canned coffee beverage (Suntory Holdings Limited, product name: BOSS Sugar Free Black) was used as the coffee extraction liquid. One gram of each MOF was added to 50 g of the coffee extraction liquid, which was then left to stand at ordinary temperature for 24 hours. Thereafter, the MOF was separated and collected, and the weight and the caffeine concentration of the coffee extraction liquid after the MOF collection were measured in the same manner as in Experimental Example 1. In addition, with respect to the coffee extraction liquid after the MOF collection, various organic acid (phosphoric acid, citric acid, malic acid, quinic acid, acetic acid, and propionic acid) components were analyzed. The contents of the organic acids were measured using an HPLC method, and measurement conditions therefor were as follows.
Measurement device: HPLC LC-20AD (SHIMADZU CORPORATION)
Detector: electric conductivity detector CDD-10A_{VP} (SHIMADZU CORPORATION)
Column: Shim-pack SCR-102H (8 mm × 300 mm, 7 µm) (SHIMADZU CORPORATION), two columns connected in series
Guard column: Shim-pack SCR-102H (6 mm × 50 mm, 7 µm) (SHIMADZU CORPORATION)
Column oven temperature: 50°C
Mobile phase: aqueous p-toluenesulfonic acid solution (5 mmol/L)
Detection liquid: aqueous Bis-Tris solution (20 mmol/L) including p-toluenesulfonic acid (5 mmol/L) and EDTA (100 µmol/L)
Pump flow rate (mobile phase): 0.8 ml/min
Pump flow rate (detection liquid): 0.8 ml/min
Injection amount: 10 µl
Polarity: +
Cell temperature: automatic setting

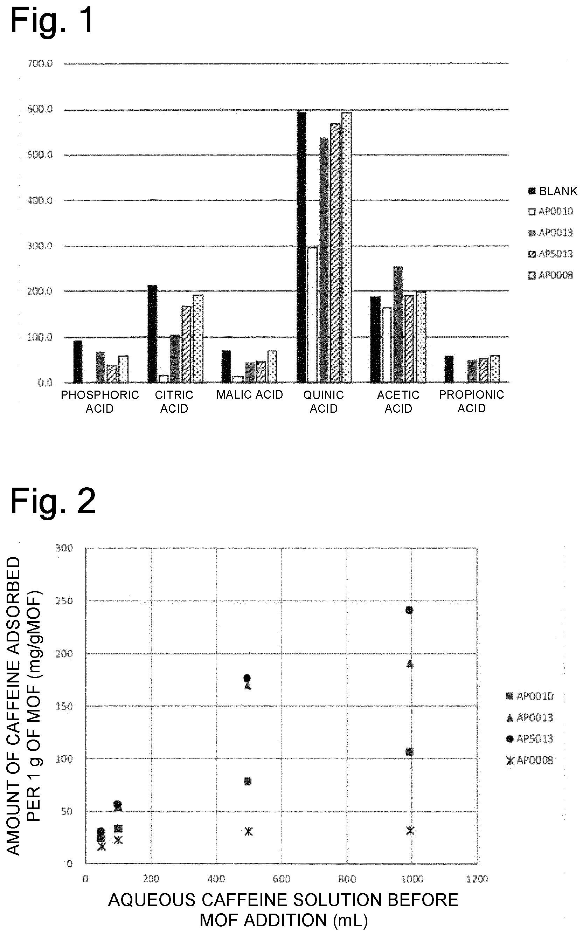

Results are shown in the table below. In addition, results of componential analysis of various organic acids are also shown in Fig. 1.

**[Table 3]**

| No. | MOF | **MOF addition amount** [g] | **Coffee extraction liquid [g]** | | **Caffeine concentration** [mg/L] | **Caffeine amount** [mg] |
|---|---|---|---|---|---|---|
| | | | **Before MOF addition** | **After MOF collection** | | |
| **None** | - | - | - | 50 | 440 | 22.00 |
| AP0010 | UiO-66 | 1.029 | 49.816 | 44.078 | 40 | 1.75 |
| AP0013 | MIL 101(Cr) | 1.021 | 49.108 | 45.515 | N.D. | 0.00 |
| AP5013 | MIL-53(Al) | 0.955 | 49.383 | 46.749 | 10 | 0.47 |
| AP0008 | ZIF-8 | 1.04 | 49.620 | 47.622 | 400 | 19.05 |

**[Table 4]**

| No. | MOF | **Organic acid [ppm]** | | | | | |
|---|---|---|---|---|---|---|---|
| | | **Phosphoric acid** | **Citric acid** | **Malic acid** | **Quinic acid** | **Acetic acid** | **Propionic acid** |
| **None** | - | 92.2 | 213.7 | 70.4 | 593.7 | 189.7 | 56.6 |
| AP0010 | UiO-66 | 0 | 14.1 | 12.4 | 296.4 | 162.4 | 0 |
| AP0013 | MIL-101(Cr) | 67.3 | 105.5 | 43.7 | 538.9 | 255.3 | 49.2 |
| AP5013 | MIL-53(Al) | 37.3 | 167.1 | 46.2 | 568.6 | 189.3 | 51.3 |
| AP0008 | ZIF-8 | 57.6 | 193.2 | 67.4 | 592.5 | 198.2 | 58.8 |

From the above results, it has been found that the caffeine adsorption performance of AP0008 deteriorated when the coffee extraction liquid was used. Regarding the MOFs other than AP0008, from the analysis results of various organic acids in the coffee extraction liquid after the MOF addition, it has been found that AP5013 exhibited the highest caffeine adsorption selectivity and AP0013 exhibited the second highest caffeine adsorption selectivity as compared to the blank (without MOF addition).

In addition, from the concentration measurement results of various organic acids, it has been found that almost all measured organic acid concentrations in AP0010 were lower than those in the blank (without MOF addition), and organic acids were also adsorbed in addition to caffeine in the coffee extraction liquid. From the above results, it has been found that the measured organic acid concentrations in AP0013 and AP5013 were relatively equal to those in the blank, and AP0013 and AP5013 can selectively separate and adsorb caffeine. When AP0013 and AP5013 are compared, from the comparison to the blank, it has been considered that AP5013 exhibits higher caffeine selective separation performance. Note that although the measured organic acid concentrations in AP0008 were approximately equal to those in the blank, since caffeine was also not adsorbed, it has been considered that AP0008 is unsuitable for use for a coffee extraction liquid.

### Experimental Example 3-1: caffeine adsorption capacity (1)

For the above-described four kinds of MOFs, a test for confirming caffeine adsorption capacity was conducted. An aqueous caffeine solution at a caffeine concentration of 600 mg/L was prepared, and 1 g of each MOF was added to 50 mL, 100 mL, 500 mL, and 1000 mL of the aqueous caffeine solution. The aqueous caffeine solution to which the MOF was added was left to stand at ordinary temperature for 24 hours, and the MOF was then separated and collected. The weight and the caffeine concentration of the aqueous caffeine solution after the MOF collection were then measured, and the caffeine weight was calculated from the caffeine concentration after the MOF collection in the same manner as in Experimental Example 1. In addition, the difference between the weight of caffeine in the aqueous caffeine solution before the MOF addition and the weight of caffeine after the MOF collection was taken as the amount of caffeine adsorbed, and the amount of caffeine adsorbed per 1 g of the MOF was investigated. Results are shown in the following table and Fig. 2.

**[Table 5]**

| No. | MOF | **MOF addition amount** (g) | **Aqueous caffeine solution (g)** | | **Caffeine concentration** (mg/L) | **Caffeine weight** (mg) | **Amount of caffeine adsorbed per 1 g of MOF** (mg/gMOF) |
|---|---|---|---|---|---|---|---|
| | | | **Before MOF addition** | **After MOF collection** | | | |
| AP0010 | UiO-66 | 1.049 | 49.583 | 43 709 | 120 | 5.2 | 23.4 |
| | | 1.001 | 99.551 | 94.241 | 290 | 27.3 | 32.4 |
| | | 1.000 | 497.259 | 490.572 | 450 | 220.8 | 77.6 |
| | | 1.000 | 994.893 | 982.14 | 500 | 491.1 | 105.9 |
| AP0013 | MIL-101(Cr) | 1.002 | 49.700 | 46.586 | 30 | 1.4 | 28.4 |
| | | 1.002 | 98.538 | 95.437 | 50 | 4.8 | 54.2 |
| | | 1.000 | 495.61 | 489.815 | 260 | 127.4 | 170.0 |
| | | 1.000 | 994.585 | 990.274 | 410 | 406.0 | 190.7 |
| AP5013 | MIL-53(Al) | 0.998 | 49.659 | 46.225 | N.D. | 0.0 | 29.9 |
| | | 1.001 | 98.536 | 95.086 | 40 | 3.8 | 55.3 |
| | | 0.997 | 495.891 | 491.126 | 250 | 122.8 | 175.3 |
| | | 1.000 | 994.602 | 990.285 | 360 | 356.5 | 240.3 |
| AP0008 | ZIF-8 | 1.009 | 49.690 | 47.015 | 280 | 13.2 | 16.2 |
| | | 1.049 | 99.094 | 96.968 | 370 | 35.9 | 22.5 |
| | | 1.039 | 496.664 | 493.625 | 540 | 266.6 | 30.3 |
| | | 1.034 | 994.471 | 990.736 | 570 | 564.7 | 30.9 |

From the above results, it has been shown that AP5013 exhibits the largest caffeine adsorption capacity, and AP0013 exhibits the second largest caffeine adsorption capacity. It has been suggested that AP5013 possibly adsorbs the largest amount of caffeine as an adsorbent.

### Experimental Example 3-2: caffeine adsorption capacity (2)

Following Experimental Example 3-1 described above, the caffeine adsorption capacities of the MOFs of AP0010, AP0013, and AP5013 were further investigated. Aqueous caffeine solutions at a caffeine concentration of 300 mg/L and 1200 mg/L were prepared, and 1 g of each MOF was added to 100 mL of the aqueous caffeine solution at each concentration. The aqueous caffeine solution to which the MOF was added was left to stand at ordinary temperature for 24 hours, and the MOF was then separated and collected as in Experimental Example 3-1. The weight and the caffeine concentration of the aqueous caffeine solution after the MOF collection were then measured. In addition, the weight of caffeine was calculated from the caffeine concentration after the MOF collection, and the amount of caffeine adsorbed per 1 gram of the MOF was investigated. Note that the concentration measurement and numerical value calculation were conducted in the same manner as in Experimental Example 3-1, and the number of tests in this experimental example was set as N = 3. Results are shown in the following table.

**[Table 6]**

| **Caffeine concentration before MOF addition** | No. | MOF | **MOF addition amount (g)** | **Aqueous caffeine solution (g)** | | **Caffeine concentration** | **Caffeine weight** | **Amount of caffeine adsorbed per 1 g of MOF** | **Caffeine adsorption amount (average)** |
|---|---|---|---|---|---|---|---|---|---|
| | | | | **Before MOF addition** | **After MOF collection** | | | | |
| | | | | | | (mg/L) | (mg) | (mg/gMOF) | |
| 300ppm | AP0010 | UiO-66 | 1.002 | 98.887 | 93.080 | 22.6 | 2.1 | 27.5 | 27.4 |
| | | | 1.005 | 98.925 | 94.770 | 23.6 | 2.2 | 27.3 | |
| | | | 0.996 | 98.222 | 94.260 | 23.4 | 2.2 | 27.4 | |
| | AP0013 | MIL-101(Cr) | 1.008 | 98.303 | 95.270 | 40.3 | 3.8 | 25.4 | 25.7 |
| | | | 0.998 | 98.833 | 95.390 | 41.0 | 3.9 | 25.8 | |
| | | | 0.997 | 98.835 | 95.100 | 42.1 | 4.0 | 25.7 | |
| | AP5013 | MIL-53(Al) | 0.995 | 98.800 | 94.950 | 5.9 | 0.6 | 29.2 | 29.0 |
| | | | 1.008 | 98.170 | 94.830 | 6.3 | 0.6 | 28.6 | |
| | | | 1.001 | 99.010 | 94.310 | 6.3 | 0.6 | 29.1 | |
| 1200ppm | AP0010 | UiO-66 | 0.996 | 98.292 | 94.310 | 188.1 | 17.7 | 100.6 | 100.0 |
| | | | 1.001 | 98.410 | 95.460 | 188.7 | 18.0 | 100.0 | |
| | | | 1.004 | 98.333 | 94.800 | 190.4 | 18.1 | 99.5 | |
| | AP0013 | MIL-101(Cr) | **1.009** | 98.455 | 95.460 | **186.6** | 17.8 | 99.4 | 100.3 |
| | | | 0.998 | 98.182 | 95.210 | 154.5 | 14.7 | 103.3 | |
| | | | 1.002 | 98.350 | 95.350 | 205.5 | 19.6 | 98.2 | |
| | AP5013 | MIL-53(Al) | 1.009 | 97.330 | 94.700 | 7.5 | 0.7 | 115.1 | 115.7 |
| | | | 1.005 | 97.350 | 94.890 | 8.7 | 0.8 | 115.4 | |
| | | | 1.001 | 97.840 | 94.540 | 7.4 | 0.7 | 116.6 | |

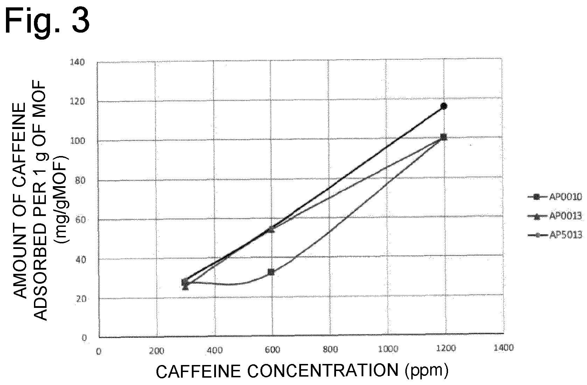

As described above, it has been shown that even when the caffeine concentration of the aqueous caffeine solution is changed, AP5013 exhibits the largest caffeine adsorption capacity, and AP0013 exhibits the second largest caffeine adsorption capacity. An adsorption isotherm of caffeine was created as shown in Fig. 3 using the caffeine adsorption amount (average) described above and the caffeine concentration of 600 mg/L shown in the results of Experimental Example 3-1.

### Experimental Example 4: Caffeine adsorption performance in various beverages

The caffeine adsorption effects of the MOFs of AP0010, AP0013, and AP5013 in a green tea beverage, a black tea beverage, and an oolong tea beverage as beverages other than coffee beverages were investigated. A commercially available PET bottled green tea beverage (Suntory Holdings Limited, product name: Suntory Iemon green tea), a commercially available PET bottled black tea beverage (Suntory Holdings Limited, product name: Craft BOSS Non-Sugar Black Tea), and a commercially available PET bottled oolong tea beverage (Suntory Holdings Limited, product name: Suntory Oolong Tea) were used as the various beverages. One gram of each MOF was added to 50 g of each of the beverage samples, which was then left to stand at ordinary temperature for 24 hours. Thereafter, the MOF was separated and collected, and the weight and the caffeine concentration in the beverage sample after the MOF collection were measured in the same manner as in Example 1, and the caffeine weight in the beverage sample after the MOF collection was calculated from these measured values. The caffeine weight in the beverage before the MOF addition was calculated with the caffeine concentration obtained from the blank (without MOF addition) taken as the caffeine concentration in the beverage before the MOF addition, and the difference between the weight of caffeine and the weight of caffeine after the MOF collection was taken as the amount of caffeine adsorbed. The amount of caffeine adsorbed per 1 g of MOF was investigated accordingly. In addition, the proportion of the amount of caffeine adsorbed with respect to the weight of caffeine obtained from the blank (without MOF addition) was investigated as a caffeine removal rate. With respect to the beverage sample after the MOF collection, componential analysis on various organic acids (phosphoric acid, citric acid, malic acid, quinic acid, acetic acid, and propionic acid) was further conducted using the same method as Experimental Example 2. The number of tests except for the blank was set as N = 3, and the average value was calculated.

In addition, the collected MOF was washed with 50 mL of distilled water three times, and components originating from each of the various beverages attached to the MOF surface were removed. Then, the MOF after washing and 50 mL of distilled water were placed in a 100-mL media bottle and left to stand at 90°C for 6 hours. Thereafter, filtration was rapidly carried out, the obtained filtrate was used as a beverage sample after desorption, and the caffeine concentration in the sample was measured in the same manner as in Experimental Example 1. From the measurement value of the caffeine concentration, the caffeine weight in the sample after desorption was calculated, and the caffeine desorption amount per 1 g of the MOF and the caffeine desorption proportion were investigated together. The number of tests was set as N = 3, and the average value was calculated.

Results of the above are shown in the following tables. Note that results obtained from Experimental Example 2 described above are incorporated in the following tables in relation to adsorption and removal of caffeine, so as to allow comparison with the coffee beverage.

**[Table 7]**

| No. | MOF | **Target beverage** | **Caffeine amount** [g] | | **Caffeine removal rate** [%] | **Amount of caffeine** a**dsorbed per 1 g of MOF** (mg/gMOF) | **Amount of caffeine desorbed per 1 g of MOF** (mg/gMOF) | **Caffeine desorption proportion** [%] |
|---|---|---|---|---|---|---|---|---|
| | | | **Before MOF addition** | **After** MOF **collection** | | | | |
| AP0010 | UiO-66 | **Coffee** | 22.0 | 1.8 | 92% | 19.59 | | - |
| | | **Green tea** | 5.0 | 0.3 | 94% | 4.70 | 1.26 | 27% |
| | | **Black tea** | 5.3 | 0.3 | 94% | 5.08 | 1.28 | 25% |
| | | **Oolong tea** | 7.2 | 0.4 | 95% | 6.87 | 1.67 | 24% |
| AP0013 | MIL-101(Cr) | **Coffee** | 22.0 | 0.0 | 100% | 21.16 | | - |
| | | **Green tea** | 5.0 | 0.3 | 93% | 4.57 | 1.33 | 29% |
| | | **Black tea** | 5.3 | 0.4 | 93% | 4.97 | 1.35 | 27% |
| | | **Oolong tea** | 7.2 | 0.5 | 93% | 6.66 | 2.12 | 32% |
| AP5013 | MIL-53(Al) | **Coffee** | 22.0 | 0.5 | 98% | 22.26 | - | - |
| | | **Green tea** | 5.0 | 0.1 | 98% | 4.80 | 0.56 | 12% |
| | | **Black tea** | 5.3 | 0.1 | 98% | 5.09 | 0.81 | 16% |
| | | **Oolong tea** | 7.2 | 0.1 | 98% | 7.13 | 0.84 | 12% |

**[Table 8]**

| | No. | MOF | **Organic acid [ppm]** | | | | | |
|---|---|---|---|---|---|---|---|---|
| | | | **Phosphoric acid** | **Citric acid** | **Malic acid** | **Quinic acid** | **Acetic acid** | **Propionic acid** |
| Green tea | None | - | 12.4 | 33.1 | 13.0 | 48.8 | 0.0 | 0.0 |
| | AP0010 | UiO-66 | 0.0 | 0.0 | 0.0 | 0.0 | 0.0 | 0.0 |
| | AP0013 | MIL-101(Cr) | 0.0 | 0.0 | 2.4 | 9.0 | 2.9 | 0.0 |
| | AP5013 | MIL-53(Al) | 0.0 | 6.7 | 7.8 | 44.3 | 0.0 | 0.0 |
| Black tea | | - | 7.8 | 16.6 | 6.3 | 67.1 | 0.0 | 0.0 |
| | AP0010 | UiO-66 | 0.0 | 0.0 | 0.0 | 0.0 | 0.0 | 0.0 |
| | AP0013 | MIL-101(Cr) | 0.0 | 0.0 | 0.0 | 0.0 | 0.0 | 0.0 |
| | AP5013 | MIL-53(Al) | 0.0 | 4.4 | 19.8 | 77.1 | 0.0 | 0.0 |
| Oolong tea | | - | 11.5 | 16.3 | 15.0 | 69.4 | 11.5 | 0.0 |
| | AP0010 | UiO-66 | 0.0 | 0.0 | 0.0 | 0.0 | 0.0 | 0.0 |
| | AP0013 | MIL-101(Cr) | 0.0 | 0.0 | 0.0 | 0.0 | 10.7 | 0.0 |
| | AP5013 | MIL-53(Al) | 0.0 | 5.7 | 6.7 | 56.1 | 10.6 | 0.0 |

As described above, it has been shown that all of AP0010, AP0013, and AP5013 have high caffeine adsorption performance in various beverages. In addition, it has been confirmed that all of the MOFs tested have an action of desorbing adsorbed caffeine. Regarding the results of measuring the concentrations of various organic acids, the concentrations of organic acids relatively equal to those of the blank were measured in the case of using AP5013, and it has been shown that AP5013 has the highest selective caffeine separation performance among the above three kinds of MOFs.

## Claims

1. A method of producing a purine alkaloid-reduced oral aqueous solution for drinking, the method comprising:
bringing, into contact with an oral aqueous solution for drinking, a metal-organic framework that comprises Zr⁴⁺, Cr³⁺, or Al³⁺ as a metal ion and comprises a terephthalic acid ion as an organic ligand.

2. The method according to claim 1, wherein the oral aqueous solution for drinking comprises a purine alkaloid.

3. The method according to claim 2, wherein a content of the purine alkaloid in the oral aqueous solution for drinking is 2000 ppm or less.

4. The method according to claim 1, wherein 0.01 to 20 parts by weight of the metal-organic framework is brought into contact with 100 parts by weight of the oral aqueous solution for drinking.

5. The method according to any one of claims 1 to 4, wherein the metal-organic framework has a pore size of 0.2 to 6 nm.

6. The method according to any one of claims 1 to 4, wherein the purine alkaloid is caffeine.

7. The method according to any one of claims 1 to 4, wherein the oral aqueous solution for drinking is a beverage.

8. The method according to claim 7, wherein the beverage is a coffee beverage or a tea beverage.

9. A purine alkaloid-reduced oral aqueous solution for drinking, which is produced by a method comprising:
bringing, into contact with an oral aqueous solution for drinking, a metal-organic framework that comprises Zr⁴⁺, Cr³⁺, or Al³⁺ as a metal ion and comprises a terephthalic acid ion as an organic ligand.

10. A method for adsorbing a purine alkaloid, comprising:
bringing, into contact with an oral aqueous solution for drinking, a metal-organic framework that comprises Zr⁴⁺, Cr³⁺, or Al³⁺ as a metal ion and comprises a terephthalic acid ion as an organic ligand.

11. A purine alkaloid adsorbent, comprising:
a metal-organic framework that comprises Zr⁴⁺, Cr³⁺, or Al³⁺ as a metal ion and comprises a terephthalic acid ion as an organic ligand.
